# EUROPÄISCHE PATENTSCHRIFT

(11) **EP 2 883 777 B1**
(45) Veröffentlichungstag und Bekanntmachung des Hinweises auf die Patenterteilung: **14.09.2016**
(21) Anmeldenummer: 14197239.8
(22) Anmeldetag: 10.12.2014
(51) Int. Cl.: B61D 17/02

(54) **Schienenfahrzeug mit Schürzenklappe**
Rail vehicle with a pivot apron
Véhicule ferroviaire avec une juppe pivotante

(30) Priorität: 13.12.2013 DE 102013225944
(43) Veröffentlichungstag der Anmeldung: 17.06.2015
(73) Patentinhaber: Bombardier Transportation GmbH, 10785 Berlin (DE)
(72) Erfinder: Selzer, Reinhard, 02625 Bautzen (DE); Bahr, Hans Ruprecht, 02633 Gaußig (DE); Blüthgen, Jörg, 02681 Crostau OT Carlsberg (DE); Pech, Stefan, 01099 Dresden (DE)
(74) Vertreter: Patentanwälte Bressel und Partner mbB

(56) Entgegenhaltungen:
- DE-A1- 2 558 664
- DE-A1-102010 061 718
- DE-B- 1 070 205
- DE-C- 726 181
- DE-C- 952 910

## Beschreibung

Die Erfindung betrifft ein Schienenfahrzeug mit zumindest einer Schürzenklappe, die über zumindest eine Verstelleinrichtung beweglich an einem Wagenkasten oder einem Untergestell des Schienenfahrzeugs angebracht ist.

Moderne Schienenfahrzeuge, wie beispielsweise Straßenbahnen, haben im Allgemeinen zur Verringerung des Luftwiderstandes und aus optischen Gründen eine stromlinienförmige Verkleidung. Das Fahrwerk eines Schienenfahrzeugs ist üblicherweise durch sogenannte Schürzenklappen zur Seite hin verkleidet. Beim Normalbetrieb des Schienenfahrzeugs wird das Fahrwerk also mit den Schürzenklappen verdeckt und es sind zumeist nur geringe Teile der Räder noch sichtbar. Neben den erwähnten Zwecken dienen die Schürzenklappen durch Abdeckung von Rädern, Fahrwerk und gegebenenfalls weiteren Räumen unterhalb des Wagenkastens der Verringerung der Unfallgefahr.

Schürzenklappen, die speziell der Abdeckung des Fahrwerks dienen, werden auch als Fahrwerksklappen bezeichnet. Im Fahrbetrieb ist eine Beweglichkeit der Fahrwerksklappen erforderlich, um eine Kurvenfahrt des Schienenfahrzeugs zu ermöglichen. Der Abstand zwischen Fahrwerksklappe und Fahrwerk ist in der Regel so gering, dass bei einer Kurvenfahrt ein Teil des Fahrwerks, z.B. ein Drehgestell, an der Fahrwerksklappe anschlägt. Die Fahrwerksklappe muss sich daher nach außen bewegen können. Das Schließen der Fahrwerksklappe, also die Rückstellung in den Normalzustand bzw. die Ausgangsposition, muss erfolgen, wenn das Fahrzeug wieder auf Geradeausfahrt ist und unter allen Bedingungen fehlerfrei funktionieren.

Zur Verstellung von Fahrwerksklappen während des Fahrtbetriebs, bei Kurvenfahrt, werden im Stand der Technik verschiedene Lösungen vorgeschlagen.

DE 948518 B offenbart als Stand der Technik eine Schürzenklappe im Bereich der Fahrzeugräder, die klappenförmig ausgebildet ist. Die Achslagergehäuse der Radsätze schlagen bei der Kurvenfahrt an der Klappe an und schwenken diese seitwärts und nach oben aufs dem Verkleidungsprofil heraus. Beim Schwenken der Klappe wird eine Torsionsfeder gespannt, die sich entspannt und die Klappe in ihre Ausgangsstellung zurückbringt, wenn das Drehgestell bzw. die Achslagergehäuse nicht mehr an der Klappe anstoßen. Nachteilig ist dabei, dass insbesondere bei engen Kurven, die Radsatzlager durch Kräfte in Achsrichtung zusätzlich belastet werden. Ferner müssen zum Überwachen der Radsatzlager die Klappen von Hand wesentlich weiter geschwenkt werden, als dies bei der Kurvenfahrt vom Drehgestell bewirkt wird. Das ist nur möglich, wenn die Torsionsfedern ausgehängt sind. Das Aushängen der Federn ist mit erheblichem Aufwand verbunden und in der Kurve - d. h. bei gespannter Feder - praktisch überhaupt nicht möglich. Die Wartung der Achslager ist somit in erheblichem Maße erschwert.
DE 948518 B schlägt zur Lösung des Problems vor, zwischen dem Drehgestell und der klappenförmig ausgebildeten Schürze Lenkerführungen, speziell Kulissenführungen anzuordnen, die ein Ausschwenken der klappenförmigen Schürze bei Kurvenfahrt bewirken und die ausgeschwenkte Schürze nach dem Auslaufen aus der Kurve wieder in ihre Ausgangsstellung zurück bringen.

DE 1070205 B offenbart als Stand der Technik Schürzenklappen, die während der Fahrt in der Geraden durch Federn oder Gestänge geschlossen gehalten und bei Fahrt durch Gleisbogen von Steuerorganen des Laufwerks gegen die Kraft der Federn oder mittels der Gestänge aufgestoßen werden. Diese Art der Schürzenklappensteuerung hat jedoch den Nachteil, dass die Klappen bei Fahrt durch Gleiskrümmungen unter Umständen übermäßig weit aufgestoßen werden können, so dass sie das Lichtraumprofil überschreiten. Durch Berühren der Bahnsteigkanten beim Durchfahren von Bahnhöfen werden die Schürzenklappen dann zerstört und möglicherweise auch etwa auf dem Bahnsteig stehende Personen gefährdet. Außerdem weisen diese Einrichtungen noch den Nachteil auf, dass sie die Überwachung der Achslager erschweren. DE 1070205 B schlägt als Lösung ein Gestänge vor zur zwangläufigen Betätigung und Verriegelung von Schürzenklappen an Windverkleidungen von Schienenfahrzeugen, die in Abhängigkeit von der durch den Halbmesser des jeweils durchfahrenen Gleisbogens bedingten Stellung des Laufwerks (z. B. des Drehgestells) steht. Gemäß DE 1070205 B ist in der festen Schürze ein äußeres Rohr über einen daran angeschweißten oder anderweitig befestigten Arm angelenkt, welches mit einer Fangnase und einer Einrastöffnung versehen ist, wobei in dieses Rohr ein über ein längenverstellbares Verlängerungsstück am Laufwerk angelenktes, ebenfalls einseitig mit einer Fangnase und einer Einrastöffnung sowie gegenüberliegend mit einem Längsschlitz versehenes inneres Rohr von geringerer Weite teleskopartig verschiebbar gelagert ist, während in beide Rohre ein mit einem schwalbenschwanzförmigen Kopf versehener Verriegelungskloben hineinragt, der an der Schürzenklappe angelenkt ist.

Die vom oben zitierten Stand der Technik genannten Lenkerführungen und Gestänge sind jeweils direkt mit der Schürzenklappe und mit dem Fahrwerk, z.B. mit einem Drehgestell, verbunden. Dadurch ergibt sich die Notwendigkeit einer gewissen Einstellbarkeit, um die Funktionsfähigkeit zu gewährleisten und die Fahrzeugkontur einzuhalten. Bekannt ist auch, dass Längsführungen besonders verschleißbehaftet sind und zum Versagen neigen. Die genannten Lösungen weisen außerdem Nachteile bei der Demontage der Schürzenklappen auf, die zur Wartung des Fahrzeugs und Fahrwerks erforderlich ist.

Die Patentschrift DE952910 und die zugehörige Offenlegungsschrift DE-M26348II/20c offenbaren eine Einrichtung zur Führung einer in einem Bereich eines Fahrzeugrades angeordneten und in Abhängigkeit vom Drehgestellausschlag aus dem Verkleidungsprofil heraus bringbaren Schürze an stromlinienförmig verkleideten Schienenfahrzeugen mit Drehgestellen. In Fahrzeugquerrichtung aus- und einziehbare Scherenführungen sind mit einem Ende an der Schürze und mit ihrem anderen Ende an einem festen Punkt des Wagenkastens angelenkt. Die Schürzenteile werden beim Einfahren in eine Kurve durch den beim Schwenken des Drehgestells anschlagenden Drehgestellrahmen aus dem Verkleidungsprofil heraus gebracht.

Aufgabe der vorliegenden Erfindung ist die Bereitstellung einer verstellbaren Schürzenklappe, welche die o.g. Nachteile nicht aufweist. Ferner sollte eine Schürzenklappe angegeben werden, die zur vereinfachten Wartung eines Schienenfahrzeugs, insbesondere eines Fahrwerks, leicht zu demontieren ist.

Angegeben wird ein Schienenfahrzeug, aufweisend
- zumindest eine Schürzenklappe mit einem ersten nach unten verlaufenden Seitenrand und einem zweiten nach unten verlaufenden Seitenrand, die über zumindest eine Verstelleinrichtung beweglich an einem Wagenkasten oder einem Untergestell des Schienenfahrzeugs angebracht ist, wobei
   die zumindest eine Verstelleinrichtung so ausgestaltet ist, dass bei einem Druck auf die Innenseite der Schürzenklappe eine Bewegung der Schürzenklappe aus einer Ausgangsposition nach außen in eine ausgestellte Position ermöglicht ist, wobei in der ausgestellten Position zumindest der erste Seitenrand ausgestellt ist und parallel oder im Wesentlichen parallel zu der Seitenwand des Wagenkastens steht und der zweite Seitenrand ausgestellt sein kann und dann parallel oder im Wesentlichen parallel zu der Seitenwand des Wagenkastens steht, und die Verstelleinrichtung ein Federelement aufweist, das so ausgestaltet ist, dass es bei Bewegung der Schürzenklappe in die ausgestellte Position gespannt wird und bei Wegnahme des Drucks auf die Innenseite der Schürzenklappe die Schürzenklappe in die Ausgangsposition zurück stellt,
- ein Fahrwerk, das um eine vertikale Achse drehbar ist, wobei bei einer Drehung des Fahrwerks um die vertikale Achse das Fahrwerk die Schürzenklappe berühren kann, einen Druck auf die Innenseite der Schürzenklappe ausüben kann und dadurch die Schürzenklappe aus der Ausgangsposition in die ausgestellte Position bringen kann,
wobei
das Fahrwerk bei der Drehung die Schürzenklappe in einem vorderen Bereich der Schürzenklappe oder in einem hinteren Bereich der Schürzenklappe berührt, und der zweite Seitenrand in der ausgestellten Position der Schürzenklappe nicht ausgestellt ist oder weniger ausgestellt ist als der erste Seitenrand, sodass die Schürzenklappe in der ausgestellten Position schräg zur Seitenwand steht.

Unter dem Seitenrand ist der bei Blick von der Seite auf die Schürzenklappe rechte oder linke Seitenrand zu verstehen. Anders ausgedrückt ist unter dem Seitenrand der bei seitlichem Blick auf das Schienenfahrzeug rechts oder links liegende Seitenrand zu verstehen. Bei einer Fahrt des Fahrzeugs liegt einer der Seitenränder in Fahrtrichtung vorn, der andere hinten. Die Bezeichnung "erster Seitenrand" und "zweiter Seitenrand" dient zur Unterscheidung verschiedener Seitenränder der Schürzenklappe, sagt aber nichts über die Lage des jeweiligen Seitenrands aus. D.h. zum Beispiel dass sowohl ein erster als auch ein zweiter Seitenrand in Fahrtrichtung nach vorn oder nach hinten liegen kann, wobei selbstverständlich bei Betrachtung einer Schürzenklappe nur einer der Ränder nach vorn und nur einer nach hinten liegen kann.

Die Seitenränder, oder der Seitenrand, verlaufen/verläuft von oben nach unten bzw., je nach Betrachtung, umgekehrt. Die Seitenränder verlaufen vorzugsweise senkrecht oder schräg. Die anderen Ränder einer Schürzenklappe werden als Oberrand und Unterrand bezeichnet und verlaufen bei seitlichem Blick auf das Schienenfahrzeug vorzugsweise horizontal oder im Wesentlichen horizontal.

Der vordere Bereich der Schürzenklappe ist ein in Fahrtrichtung vorderer Bereich. Der hintere Bereich der Schürzenklappe ist ein in Fahrtrichtung hinterer Bereich.

Beispielsweise kann die Schürzenklappe gedanklich durch eine senkrechte Mittellinie in zwei Hälften geteilt sein, wobei die in Fahrtrichtung vordere Hälfte den vorderen Bereich bildet und die in Fahrtrichtung hintere Hälfte den hinteren Bereich.

Erfindungsgemäß existiert keine Verbindung zwischen einem Fahrwerk und der Schürzenklappe bzw. Fahrwerksklappe. Damit ist eine freie Drehbewegung des Fahrwerks, insbesondere eines Drehgestelles, um die Vertikalachse bis zum Berühren der Schürzenklappe möglich. Bei einer geeigneten Bewegung des Fahrwerks, beispielsweise bei einer Kurvenfahrt, stößt dieses gegen die Schürzenklappe und drückt diese selbsttätig gegen das Federelement der Verstelleinrichtung auf. Bauteile zwischen der Schürzenklappe und dem Fahrwerk, die diese Elemente miteinander verbinden, sind nicht erforderlich. Das Aufdrücken der Schürzenklappe kann durch Teile des Fahrwerks selbst oder am Fahrwerk angebrachte Drückelemente oder Steuerelemente erfolgen. Es ist vorteilhaft, an dem Fahrwerk ein flächiges Element anzubringen, das beim Auslenken des Fahrwerks auf der Innenseite der Schürzenklappe anstößt und einen Druck nicht nur punktuell, sondern über eine größere Fläche auf die Innenseite der Schürzenklappe ausübt. Die Schürzenklappe ist demgemäß durch Anstoßen eines Fahrwerks oder von Teilen eines Fahrwerks oder von Anbauteilen an ein Fahrwerk und den dadurch ausgeübten Druck auf die Innenseite der Schürzenklappe aus der Ausgangsposition, die bei Geradeausfahrt des Fahrzeugs eingenommen wird, in die ausgestellte Position beweglich. Erfindungsgemäß sind keine Synchronisationsmittel, wie Gestänge und Führungen, zur Synchronisierung einer Fahrwerksbewegung und einer Schürzenklappenbewegung vorgesehen.

Ein weiteres grundsätzliches Merkmal der Erfindung ist die Art der Öffnung der Schürzenklappe. Wie angegeben steht in der ausgestellten Position zumindest der erste nach unten verlaufende Seitenrand der Schürzenklappe parallel oder im Wesentlichen parallel zu der Seitenwand des Wagenkastens, wobei die beiden Seitenränder unterschiedlich weit von der Seitenwand entfernt sind, was den Fall einschließt dass der zweite Seitenrand im Vergleich zur Ausgangsposition nicht von der Seitenwand entfernt sein muss. Infolgedessen steht die Schürzenklappe in der ausgestellten Position schräg zur Seitenwand. Das Ausklappen der Schürzenklappe ist in der Bewegungsart beispielsweise analog zu der Bewegung eines Türblattes einer Schwenktür. Bei dieser Schrägstellung werden der Oberrand und der Unterrand der Schürzenklappe von der Seitenwand des Wagenkastens entfernt und stehen bei Blick von oben in der ausgestellten Position der Klappe schräg zur Seitenwand. Dass die Schürzenklappe in der ausgestellten Position schräg zur Seitenwand steht bedeutet also, dass die Schürzenklappe bei Blick oder Betrachtung von oben, also bei Blickrichtung oder Betrachtungsrichtung nach unten, schräg zur Seitenwand steht.

Beispielsweise ist die Schürzenklappe im Bereich eines der Seitenränder, der auch als erster Seitenrand bezeichnet wird, an eine Verstelleinrichtung angekoppelt. Auf der Seite dieses Seitenrandes wird die Schürzenklappe bei Druck von innen nach außen bewegt, sodass in der ausgestellten Position die Schürzenklappe von der Seitenwand des Wagenkastens abgehoben ist und der ausgestellte Seitenrand parallel oder im Wesentlichen parallel zu der Seitenwand ist. Ein weiterer nach unten verlaufender Seitenrand der Klappe am anderen Ende der Klappe, der auch als zweiter Seitenrand bezeichnet wird, ist nicht oder weniger ausgestellt. Die Ankopplung der Schürzenklappe im Bereich des ersten Seitenrandes an die Verstelleinrichtung ist keine zwingende Voraussetzung für diese Art der Bewegung und es prinzipiell auch eine Ankopplung in einem anderen Bereich der Schürzenklappe an eine geeignete Verstelleinrichtung denkbar. Durch diese spezielle Form der Ausklappbewegung wird genug Raum für das Fahrwerk bei einer Bewegung in der Kurve geschaffen, ohne dass dazu die Schürzenklappe nach oben aufgekappt werden muss, wie im Stand der Technik. Diese Ausklappbewegung birgt weniger Gefahrenpotential als ein Schwenken nach oben, da nicht die gesamte Unterkante der Schürzenkante nach oben geschwenkt wird, was ein Gefahrenpotential für Fußgänger mit sich bringt. Der Raumbedarf für die Ausschwenkbewegung ist kleiner als bei einem Aufklappen nach oben.

Die Verstelleinrichtung ist vorzugsweise an einem Wagenkasten oder an einem Untergestell des Schienenfahrzeugs unterhalb einer Seitenwand des Wagenkastens angebracht.

Geeignete Schienenfahrzeuge sind beispielsweise Straßenbahnwagen oder Straßenbahnmodule, Wagen von Regional- oder Fernzügen oder ganze Züge.

In einer Variante der Erfindung ist die Schürzenklappe im Bereich zweier Seitenränder, also im Bereich des ersten und des zweiten Seitenrandes an jeweils eine Verstelleinrichtung angekoppelt. Durch diese Ausführungsform wird eine Schrägstellung der Schürzenklappe in beide Richtungen Die beiden Arten der Schrägstellung sind Folgende:
- eine Entfernung des in Fahrtrichtung vorderen Seitenrandes der Schürzenklappe nach außen und eine geringere oder keine Entfernung des in Fahrtrichtung hinteren Seitenrandes nach außen,
- eine Entfernung des in Fahrtrichtung hinteren Seitenrandes nach außen und eine geringere oder keine Entfernung des in Fahrtrichtung vorderen Seitenrandes nach außen, also der umgekehrte Fall.

Im Fahrtbetrieb wird die Schrägstellung in die eine oder andere Richtung erreicht, wenn das Fahrwerk bei Drehung entweder im vorderen Bereich oder im hinteren Bereich der Schürzenklappe anschlägt, je nach Kurvenrichtung und Eindrehung des Fahrwerks in der Kurve.

In einer Ausführungsform der Erfindung ist die Verstelleinrichtung so ausgestaltet, dass die Bewegung der Schürzenklappe nach außen begrenzt ist. Die Begrenzung kann durch ein geeignetes Federelement bewirkt werden oder durch ein Begrenzungselement, das an der Verstelleinrichtung vorgesehen ist, beispielsweise ein Anschlag. Im Allgemeinen ist es ausreichend, bei der Verstelleinrichtung einen maximal möglichen Verstellweg vorzusehen, wodurch wiederum die Bewegung der Schürzenklappe nach außen begrenzt wird. Mit dieser Ausführungsform wird eine Bewegung der Schürzenklappe, die über das gewünschte und erforderliche Maß hinausgeht und beispielsweise Passanten gefährden könnte, verhindert.

In einer anderen Ausführungsform der Erfindung ist die Schürzenklappe über zumindest ein lösbares Befestigungsmittel an die Verstelleinrichtung gekoppelt, sodass die Schürzenklappe durch Lösen des Befestigungsmittels entfernbar ist. Beispielsweise kann die Schürzenklappe an die Verstelleinrichtung angeschraubt oder angesteckt werden, beispielsweise mit einem oder mehreren formschlüssigen Verbindungsmitteln. Diese Ausführungsform ermöglicht eine besonders einfache Montage und Demontage der Schürzenklappe und damit eine vereinfachte Wartung oder Reparatur des Fahrzeugs im Bereich des Untergestells oder Fahrwerks. Zur Demontage der Schürzenklappe wird diese von den Verstelleinrichtungen gelöst und die Verstelleinrichtungen selbst können am Wagenkasten oder Untergestell verbleiben. Dadurch wird ein Eingreifen in den Verstellmechanismus vermieden, da die Verstelleinrichtung durch Abnahme der Schürzenklappe nicht in ihrer Eigenschaft beeinflusst wird. Beim Montieren der Schürzenklappe, beispielsweise nach Abschluss der Wartungsarbeiten, sind somit auch keine Einstellungen oder Justierungen an der Verstelleinrichtung erforderlich. Bei Gestängen oder Lenkerführungen zwischen Fahrwerk und Schürzenklappe, wie sie vom Stand der Technik angegeben werden, sind diese Vorteile nicht gegeben.

In einer weiteren Ausführungsform der Erfindung weist die Verstelleinrichtung Mittel zum Ausrichten der Schürzenklappe auf. Vorgesehen sind insbesondere Mittel, die eine Ausrichtung der Schürzenklappe in horizontale und/oder vertikale Richtung ermöglichen. Stattdessen oder zusätzlich dazu können auch Mittel zur Verstellung bzw. Ausrichtung der Schürzenklappe nach außen und innen vorgesehen sein. Eine Ausrichtung der Schürzenklappe bezieht sich insbesondere auf die Ausgangsposition, welche die Schürzenklappe bei einer Geradeausstellung des Fahrzeugs einnimmt.

In einer Variante der Erfindung ist es vorgesehen, dass das Federelement in der Ausgangsposition der Schürzenklappe eine Vorspannung aufweist. Durch eine solche Vorspannung wird ein Klappern oder Vibrieren der Schürzenklappe im Fahrtbetrieb verhindert oder minimiert.

In einer Ausführungsform ist vorgesehen, dass das Federelement aus einem Elastomer, insbesondere Gummi, ist. Dadurch wird eine sehr gute Korrosionsbeständigkeit und Dämpfung erzielt.

In einer Ausführungsform der Erfindung wird ein Schienenfahrzeug angegeben, wobei die Verstelleinrichtung aufweist:
- ein erstes Befestigungselement, über das die Verstelleinrichtung an den Wagenkasten oder das Untergestell gekoppelt ist,
- ein zweites Befestigungselement, an das die Schürzenklappe gekoppelt ist,
wobei das erste Befestigungselement über das Federelement mit dem zweiten Befestigungselement gekoppelt ist. Beide Befestigungselemente sind anders ausgedrückt über das Federelement, oder mehrere Federelemente, aneinander gekoppelt, wobei weitere Teile zwecks Kopplung der Befestigungselemente vorhanden sein können.

Die Schürzenklappe kann beispielsweise mit einem vorangehend beschriebenen lösbaren Befestigungselement an dem zweiten Befestigungselement der Verstelleinrichtung angebracht sein. Das erste Befestigungselement der Verstelleinrichtung kann an einem Wagenkasten oder einem Untergestell des Schienenfahrzeugs mittels beliebiger Befestigungselemente, insbesondere Schrauben, angebracht sein. Zwischen dem ersten Befestigungselement und dem zweiten Befestigungselement der Verstelleinrichtung können neben dem Federelement ein oder mehrere beliebige Kupplungselemente angeordnet sein, die translatorisch und/oder rotatorisch wirken. Das zweite Befestigungselement kann relativ zu dem ersten Befestigungselement beim Verstellen der Verstelleinrichtung gedreht und/oder verschoben werden.

In einer speziellen Variante der oben beschriebenen Verstelleinrichtung ist das zweite Befestigungselement über einen Schwenkarm mit dem ersten Befestigungselement gekoppelt, der drehbar relativ zu dem ersten Befestigungselement und zu dem zweiten Befestigungselement ist, sodass zur Bewegung der Schürzenklappe in die ausgestellte Position der Schwenkarm nach außen schwenkbar ist. In dieser Variante wird die Schürzenklappe bei der Bewegung nach außen in die ausgestellte Position auch leicht zur Seite bewegt. Die Verstelleinrichtung kann ein Ausgleichsmittel aufweisen, welches eine Verschiebung der Schürzenklappe in Fahrtrichtung oder gegen die Fahrtrichtung ermöglicht. Die Verschiebung ist vorzugsweise minimal und liegt im Bereich von wenigen Millimetern bis Zentimetern.

In einer anderen Variante der Verstelleinrichtung ist das zweite Befestigungselement über ein Translationsmittel mit dem ersten Befestigungselement gekoppelt, sodass zur Bewegung der Schürzenklappe in die ausgestellte Position das Translationsmittel nach außen verschiebbar ist. Bei dieser Variante einer Verstelleinrichtung wird die Schürzenklappe lediglich in die ausgestellte Position, d.h. quer zur Fahrtrichtung, verschoben und nicht in die Fahrtrichtung oder gegen die Fahrtrichtung verschoben, wie das bei der zuvor beschriebenen Variante der Fall ist. Mittel zum Ausgleich einer Verschiebung der Schürzenklappe in Fahrtrichtung oder gegen Fahrtrichtung sind in dieser Variante entbehrlich.

In einer Ausführungsform der Erfindung weist die Verstelleinrichtung einen Anschlag auf, an dem die Schürzenklappe in der Ausgangsposition anschlägt. Vorzugsweise wird die Schürzenklappe durch ein vorgespanntes Federelement gegen den Anschlag gezogen. Die Ausgangsposition der Schürzenklappe wird eingenommen, wenn das Schienenfahrzeug gerade ausgerichtet ist, also beispielsweise bei Fahrt auf gerader Strecke.

Nachfolgend wird die Erfindung anhand von Ausführungsbeispielen beschrieben. Es zeigen:
- Fig. 1: ein Schienenfahrzeug in einer Gesamtansicht,
- Fig. 2: eine seitliche Ansicht eines Fahrwerkteils mit Schürzenklappenpositionen,
- Fig. 3: das Bewegungsprinzip der erfindungsgemäßen Schürzenklappen bei einer Kurvenfahrt,
- Fig. 4a-b: eine Schürzenklappe mit Verstelleinrichtungen gemäß einer ersten Ausführungsform,
- Fig. 5: eine Verstelleinrichtung gemäß der ersten Ausführungsform,
- Fig. 6a-d: Details der Verstelleinrichtung nach Fig. 5,
- Fig. 7a-b: eine Schürzenklappe mit Verstelleinrichtungen gemäß einer zweiten Ausführungsform,
- Fig. 8: eine Verstelleinrichtung gemäß der zweiten Ausführungsform und
- Fig. 9: ein Detail der Verstelleinrichtung gemäß Fig. 8.

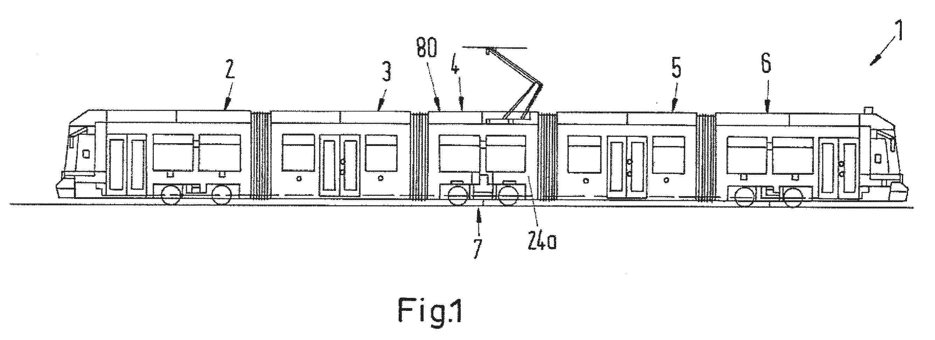

Fig. 1 zeigt ein Schienenfahrzeug 1, in diesem Fall eine Straßenbahn, die aus mehreren gelenkig miteinander verbundenen Modulen 2, 3, 4, 5, 6 aufgebaut ist. Die Module 2, 6 sind Kopfmodule mit jeweils einem Fahrwerk, welche über je zwei gefederte Pendel mit dem Wagenkasten verbunden sind. Das Modul 4 ist ein Mittelmodul, das ebenfalls ein Fahrwerk aufweist, welches mit dem Bezugszeichen 7 versehen ist. Alle Module weisen Wagenkästen auf. Das Modul 4 weist den Wagenkasten 80 auf. Das Prinzip funktioniert bei pendelnd gelagerten Fahrwerken und Drehgestellen. In den nachfolgenden Beispielen ist das Fahrwerk 7 in Form eines Drehgestells ausgeführt.

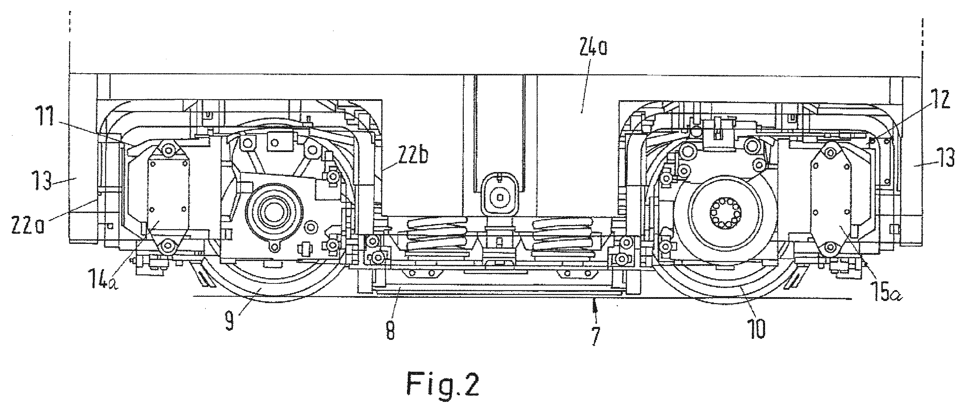

Fig. 2 zeigt die vergrößerte Ansicht des Fahrwerks 7, das den Fahrwerkrahmen 8, der hier ein Drehgestellrahmen ist, und Räder aufweist, von denen hier beispielhaft die Räder 9, 10 auf einer Seite des Fahrzeugs gezeigt sind. Transparent dargestellt sind Schürzenklappen 11, 12, welche die Räder 9, 10 und einen vorderen bzw. hinteren Teil des Fahrwerks 7 verdecken. Mit dem Bezugszeichen 13 ist das Untergestell des Moduls 4 aus Fig. 1 bezeichnet, woran die Schürzenklappen 11, 12 angebracht sind. Am vorderen und am hinteren Ende des Fahrwerks 7 sind als Steuerelemente Steuerplatten 14a, 15 a angebracht, die bei einer Kurvenfahrt bzw. bei einer Auslenkung des Fahrwerks 7 gegen die transparent dargestellten Schürzenklappen 11, 12 von der Innenseite her drücken. Es ist in dieser Ausführungsform vorgesehen, dass entweder die Platte 14a gegen die Schürzenklappe 11 oder die Platte 15a gegen die Schürzenklappe 12 drückt.

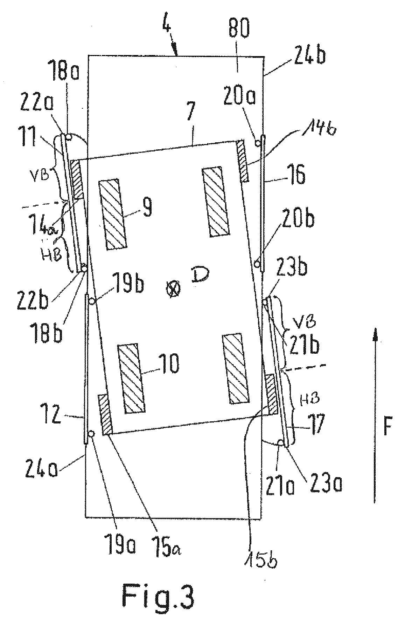

Dargestellt ist ein beispielhafter Bewegungsvorgang in der Fig. 3. Fig. 3 zeigt schematisch eine Sicht von oben auf das Modul 4 und dessen Wagenkasten 80 aus Fig. 1 (es könnte sich aber ebenso um das Modul 2 oder das Modul 6 handeln). Die Fahrtrichtung ist mit dem Pfeil F dargestellt. Das Fahrwerk 7 ist um die vertikale Achse D drehbar, die senkrecht zur Figurenebene steht und ist in eine Linkskurve gedreht. Dies führt dazu, dass die Steuerplatte 14a gegen die Innenseite der Schürzenklappe 11 drückt und die Schürzenklappe 11 aus ihrer Ausgangsposition in eine nach außen ausgestellte Position bringt. Die Steuerplatte 14a drückt in dem in Fahrtrichtung F vorderen Bereich VB der Schürzenklappe 11 gegen die Innenseite dieser Schürzenklappe. Der vordere Bereich erstreckt sich über die Hälfte der Schürzenklappe 11. An den vorderen Bereich schließt der hintere Bereich HB an, der sich über die andere Hälfte der Schürzenklappe erstreckt. Der vordere Bereich VB und der hintere Bereich HB sind durch eine gedachte gestrichelte Linie voneinander abgegrenzt. Die Erstreckung des vorderen Bereiches VB und die Erstreckung des hinteren Bereiches HB ist jeweils durch eine Klammer bei den Bezugszeichen angedeutet, welche kein Bestandteil der Schürzenklappe ist, sondern nur die räumliche Erstreckung der Bereiche VB, HB zeigt.

Mittels der Verstelleinrichtungen 18a und 18b ist die Schürzenklappe 11 nach außen, quer zur Fahrtrichtung, beweglich. In der ausgestellten Position der Schürzenklappe 11 ist der erste Seitenrand 22a der Schürzenklappe 11 weiter ausgestellt als der zweite Seitenrand 22b, der auch etwas von der Seitenwand 24a abgehoben ist. Es resultiert eine Schrägstellung der Schürzenklappe 11, in etwa im gleichen Winkel wie die Räder 9, 10, was aber nicht zwingend ist. Die Schürzenklappe 12 mit den Verstelleinrichtungen 19a, 19b befindet sich in ihrer Ausgangsposition, die auch bei Geradeausfahrt eingenommen wird, weil kein Druck seitens des Fahrwerks 7 bzw. seitens der Steuerplatte 15 auf sie ausgeübt wird. Der Seitenrand 22a der Schürzenklappe 11, der sich in Blickrichtung des Betrachters erstreckt (vergleiche auch mit Fig. 2), steht parallel oder im Wesentlichen parallel zu der Seitenwand des Wagenkastens. In gleicher Weise steht der Seitenrand 22b parallel zur in Fahrtrichtung F linken Seitenwand 24a.

Auf der in Fahrtrichtung F rechten Seite mit der Seitenwand 24b sind die Verhältnisse genau umgekehrt, im Sinne einer Punktsymmetrie um den Drehpunkt des Fahrwerks, wie aus Fig. 3 zu ersehen ist. Die Schürzenklappe 17 mit den Verstelleinrichtungen 21 a, 21 b sowie den Seitenrändern 23a, 23b wird durch die Drehbewegung des Fahrwerks 7 in eine ausgestellte Position gedrückt, wobei die ausgestellte Position durch die Verstelleinrichtungen 21 a, 21 b ermöglicht wird. Die Steuerplatte 15a drückt in dem in Fahrtrichtung F hinteren Bereich HB der Schürzenklappe 17 gegen die Innenseite dieser Schürzenklappe. Der hintere Bereich HB erstreckt sich über die hintere Hälfte der Schürzenklappe 17. An den hinteren Bereich schließt der vordere Bereich VB an, der sich über die andere, in Fahrtrichtung F vordere Hälfte der Schürzenklappe erstreckt. Wiederum sind der vordere Bereich VB und hintere Bereich HB durch eine gedachte gestrichelte Linie voneinander abgegrenzt. Die Erstreckung des vorderen Bereiches VB und die Erstreckung des hinteren Bereiches HB ist jeweils durch eine Klammer bei den Bezugszeichen angedeutet. Die vordere Schürzenklappe 16 mit den Verstelleinrichtungen 20a, 20b befindet sich in ihrer Ausgangsposition, da das Fahrwerk 7 nicht anschlägt.

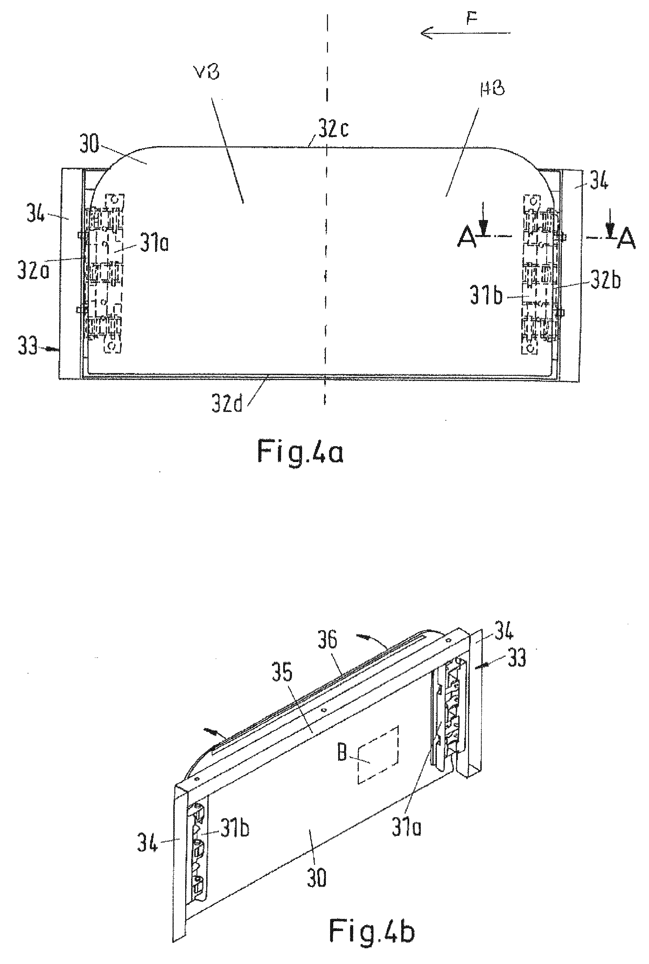

Fig. 4a zeigt eine Schürzenklappe 30 mit Verstelleinrichtungen 31 a und 31 b. Der Blick des Betrachters fällt von der Seite, außerhalb des Schienenfahrzeugs stehend, auf die Schürzenklappe 30, sodass die Verstelleinrichtungen 31 a und 31 b hinter der Schürzenklappe 30 angeordnet sind, was durch die gestrichelte Zeichnung angedeutet ist. Der in einer angenommenen Fahrtrichtung F vordere Bereich VB der Schürzenklappe 30 und der hintere Bereich HB der Schürzenklappe sind durch eine gedachte gestrichelte Linie getrennt und erstrecken sich jeweils über die Hälfte der Schürzenklappe 30. Die Verstelleinrichtungen 31 a und 31 b sind an dem Untergestell 33 seitlich, hier an Trägern 34 des Untergestells 33, befestigt. Gezeigt ist nur ein Teil des Untergestells 33. Die Schürzenklappe 30 weist die Seitenränder 32a und 32b auf und die Schürzenklappe ist im Bereich der Seitenränder 32a, 32b an die Verstelleinrichtungen 31 a, 31 b angekoppelt. Im konkreten Fall sind die Verstelleinrichtungen neben den Seitenrändern auf der Rückseite der Schürzenklappe 30 befestigt. Ferner weist die Schürzenklappe 30 den Oberrand 32c und den Unterrand 32d auf.

Fig. 4b zeigt die Anordnung von Fig. 4a von der Rückseite in perspektivischer Ansicht. Gezeigt ist somit die Innenseite der Schürzenklappe 30, die dem Fahrwerk 7 zugewandt ist. Gesetzt den Fall, die Schürzenklappe 30 in Fig. 4b ist analog zu der Schürzenklappe 11 in Fig. 3, dann ist mit dem Bereich B gestrichelt der Bereich markiert, an dem das Fahrwerk mit beispielsweise einer Steuerplatte 14a anstoßen könnte. Dabei würde die Schürzenklappe 30 in Pfeilrichtung aufgedrückt, durch am Oberrand der Schürzenklappe 30 gezeigte Pfeile. Der Seitenrand 32a (Fig. 4a) steht dann parallel oder im Wesentlichen parallel zu dem Träger 34 des Untergestells 33. Auch eine leichte Schrägstellung des Seitenrandes wird immer noch als im Wesentlichen parallel angesehen. Eine Seitenwand ist im Wesentlichen parallel zu dem Verlauf des Trägers 34 ausgerichtet, sodass der Seitenrand 32a (Fig. 4a) auch parallel oder im Wesentlichen parallel zu der Seitenwand des Wagenkastens sein wird. Im Bereich des Seitenrandes 32a bzw. der Verstelleinrichtung 31 a öffnet die Schürzenklappe 30 etwas weiter als im Bereich des zweiten Seitenrandes 32b bzw. der Verstelleinrichtung 31 b, sodass eine Schrägstellung resultiert, wie in der Fig. 3 anhand der Schürzenklappe 11 gezeigt. Die Schrägstellung ist auch durch unterschiedlich lange Pfeile am Oberrand der Schürzenklappe 30 in Fig. 4b angedeutet. Grundsätzlich ist es alternativ möglich, nur dem Seitenrand 32a mit einer Verstelleinrichtung 31 a die Möglichkeit zu geben, sich nach außen zu bewegen, während der Seitenrand 32b nicht nach außen bewegt wird. Dazu kann lediglich eine Verstelleinrichtung 31 a vorgesehen sein und die Verstelleinrichtung 31 b durch ein anderweitiges Scharnier ersetzt sein, das keine Fortbewegung des Seitenrandes 32b zulässt.

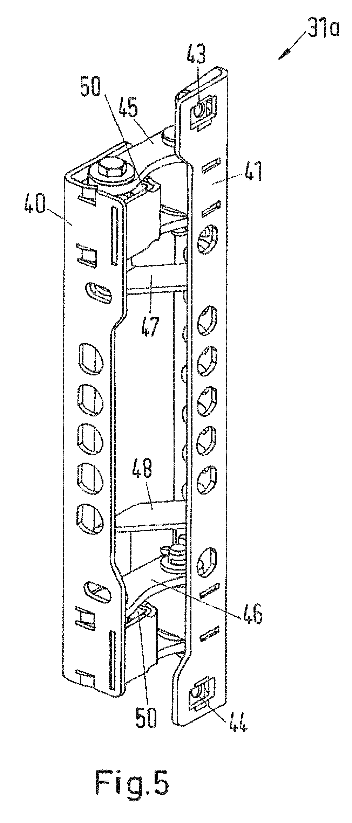

Fig. 5 zeigt in vergrößerter Ansicht die eine Verstelleinrichtung 31 a, die nach dem gleichen Prinzip arbeitet wie die Verstelleinrichtung 31 a aus Fig. 4a und Fig. 4b und daher mit dem gleichen Bezugszeichen bezeichnet wird. Diese Verstelleinrichtung ist gegenüber Fig. 4a-b etwas abgewandelt und weist zwei Federelemente 50 auf, während die Verstelleinrichtung 31 a in Fig. 4a/b noch ein drittes Federelement in der Mitte, zwischen diesen beiden Federelementen, mit zugeordneten Schwenkarmen aufweist. Die Verstelleinrichtung 31 a weist ein erstes Befestigungselement 40 in Form eines Winkels auf, über das die Verstelleinrichtung 31 a an den Träger 34 des Untergestells 33 (siehe Fig. 4a und 4b) gekoppelt wird. Im konkreten Fall wird der Winkel 40 an den Träger 34 angeschraubt. Die Schürzenklappe 30 wird über lösbare Befestigungsmittel mit dem zweiten Befestigungselement 41 der Verstelleinrichtung 31 a verbunden. Das zweite Befestigungselement 41 ist ebenfalls winkelförmig und weist Löcher 43, 44 mit Innengewinde auf. Das zweite Befestigungselement 41 ist über Gelenkarme 45, 46 an dem ersten Befestigungselement 40 angelenkt. Des Weiteren sind Anschläge 47, 48 vorhanden.

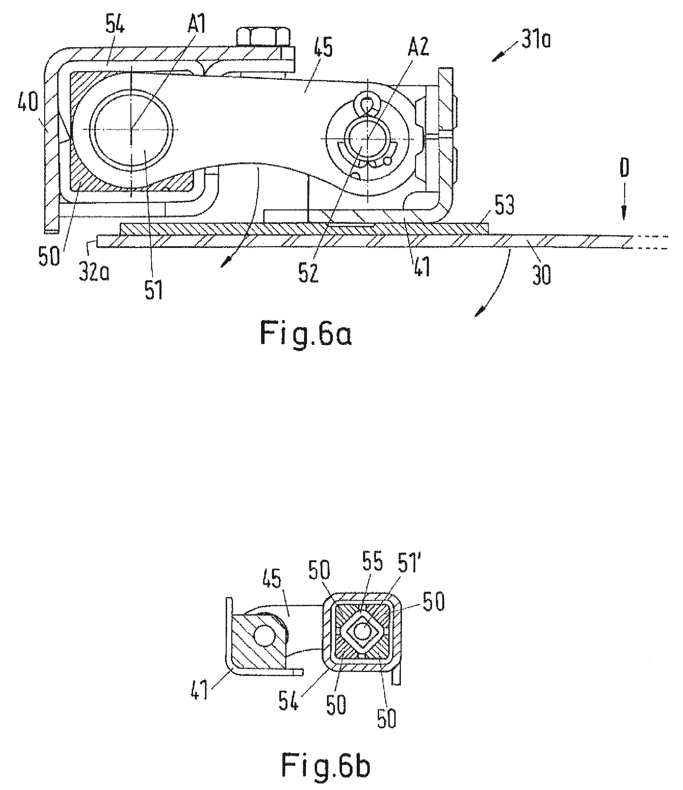

Fig. 6a zeigt eine Ansicht von oben auf die Verstelleinrichtung 31 a aus Fig. 5. Der Schwenkarm bzw. Hebel 45 ist mit dem Bolzen 51 an dem Winkel 40 angelenkt und um die Achse A1 drehbar. Mit dem anderen Ende ist der Schwenkarm 45 mit dem Bolzen 52 an dem Winkel 41 angelenkt und die Achse A2 drehbar. Die Bewegung des Armes 45 beim Ausstellen der Schürzenklappe 30 ist durch einen Pfeil gezeigt. Die Schürzenklappe 30 ist über eine Distanzplatte 53 mit dem Winkel 41 verbunden. Die Schürzenklappe 30 vollzieht die Bewegung des Schwenkarms 45 mit oder anders ausgedrückt der Schwenkarm 45 vollzieht die Bewegung der Schürzenklappe 30 mit, wenn ein Druck D auf das Innere der Schürzenklappe 30 ausgeübt wird. Durch die Drehbarkeit um die Achse A2 sind verschiedene Winkelstellungen der Schürzenklappe 30 relativ zum Untergestell und zur Wagenkastenseitenwand möglich.

Der Bolzen 51 ist in einem Federelement 50 aus Gummi gelagert, aus welchem die Bewegung des Armes 45 eine Verwindung erfährt und eine entsprechende Rückstellkraft auf den Arm 45 ausübt. Das Federelement ist von einem Gehäuse 54 umfasst, das wiederum an dem Winkel 40 befestigt ist. In der Fig. 6a ist zu sehen, dass die Bewegung der Schürzenklappe 30 eine Bewegung nach außen, in der dargestellten Ansicht nach unten, und zur Seite, in der dargestellten Ansicht nach links, ist. Das Federelement 50 und das Gehäuse 54 können von der Fa. Rosta GmbH bezogen werden.

Fig. 6b zeigt den Aufbau des Federelements 50. Das Federelement 50 besteht aus vier an den Ecken des Gehäuses 54 angeordneten Gummisegmenten, die ein wiederum viereckiges Innengehäuse 55 einfassen und sowohl mit dem Gehäuse 54 als auch dem Gehäuse 55 verhaftet sind. Innerhalb des Gehäuses 55 ist der Bolzen 51' drehfest zu dem Gehäuse 55 angeordnet. Bei Drehung des Arms 45 werden somit gleichsam der Bolzen 51' und das Gehäuse 55 verdreht und die Gummisegmente 50 verformt. Die elastische Rückstellkraft der verdrillten Gummisegmente 50 bringt den Hebel 45 wieder in die in Fig. 6b und 6a gezeigte Ausgangslage, sobald kein Druck mehr auf die Innenseite der Schürzenklappe 30 ausgeübt wird.

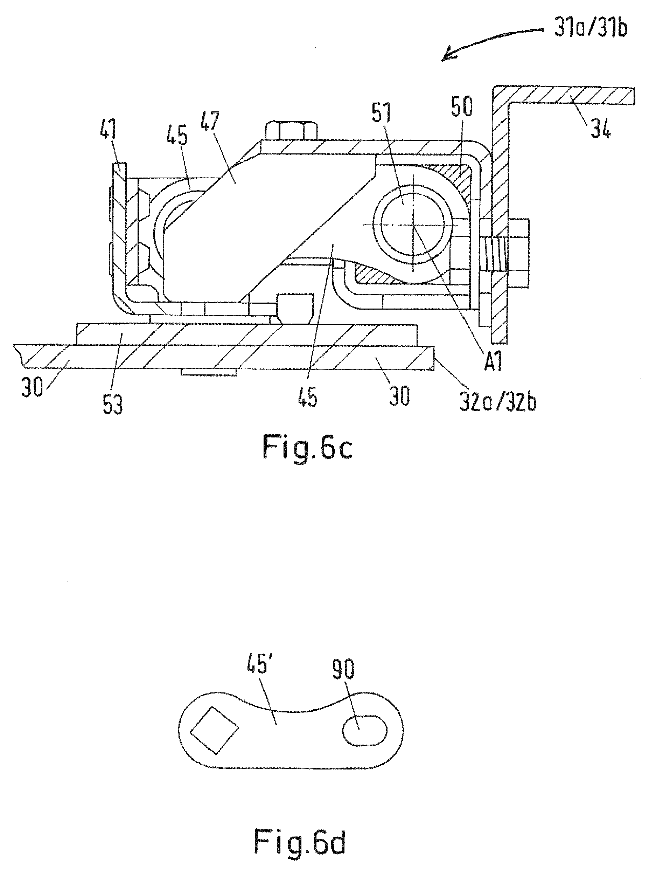

Fig. 6c zeigt eine spiegelverkehrte Ansicht zu Fig. 6a, wobei gleiche Teile der Einfachheit halber mit gleichen Bezugszeichen versehen sind. Anders betrachtet, zeigt Fig. 6c einen Schnitt entlang A-A in Fig. 4a, wobei dann die Verstelleinrichtung 31 b gezeigt ist. Die Bezugszeichen 31 a und 31 b sind daher alternativ angegeben, wie die Bezugszeichen der Seitenränder 32a und 32b. Zusätzlich zu Fig. 6a ist ein Anschlag 47 gezeigt, gegen den der Winkel 41, der mit der Schürzenklappe 30 verbunden ist, anschlägt, wenn das Federelement 50 eine Rückstellkraft auf den Hebel 45 ausübt und ihn zur Fahrwerkseite hin (in dieser Ansicht nach oben) zurückschwenkt. Der Anschlag 47 begrenzt somit die Rückbewegung des Arms 45 und der Schürzenklappe 30 und definiert somit die Ausgangsposition der Schürzenklappe 30, die in der Fig. 6c gezeigt ist.

Fig. 6d zeigt eine spezielle Ausgestaltung eines Hebelarms 45 aus Fig. 6a, hier bezeichnet als 45'. Im Bereich der Drehachse A2 weist der Hebelarm ein Langloch 90 auf, um eine Seitwärtsbewegung der Schürzenklappe 30 auszugleichen. Es können die Verstelleinrichtung 31 a, die Verstelleinrichtung 31 b oder beide mit solchen Hebeln ausgestattet sein, um eine verspannungsfreie Bewegung der Schürzenklappe 30 nach außen zu ermöglichen.

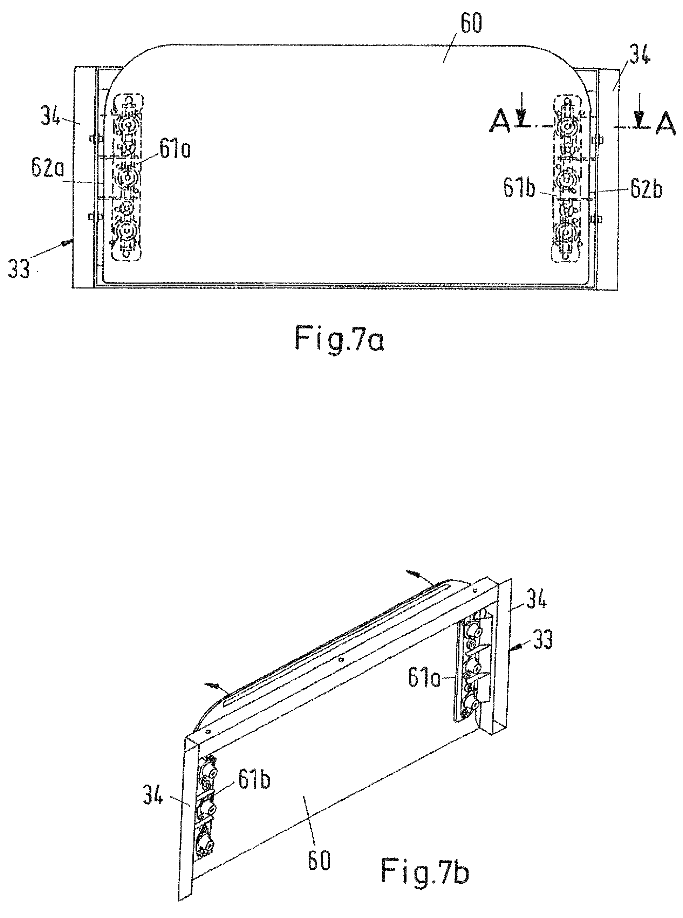

Fig. 7a und Fig. 7b zeigen eine weitere Ausführungsform einer Schürzenklappe 60 mit Verstelleinrichtungen 61 a und 61 b. Die Darstellungen sind analog zu Fig. 4a und 4b, außer dass der Aufbau der Verstelleinrichtungen 31 a und 31 b gegenüber diesen Figuren verändert ist. Die Seitenränder der Schürzenklappe 60 sind mit 62a und 62b bezeichnet. Bei dem Untergestell 33 wurden analoge Bezugszeichen verwendet.

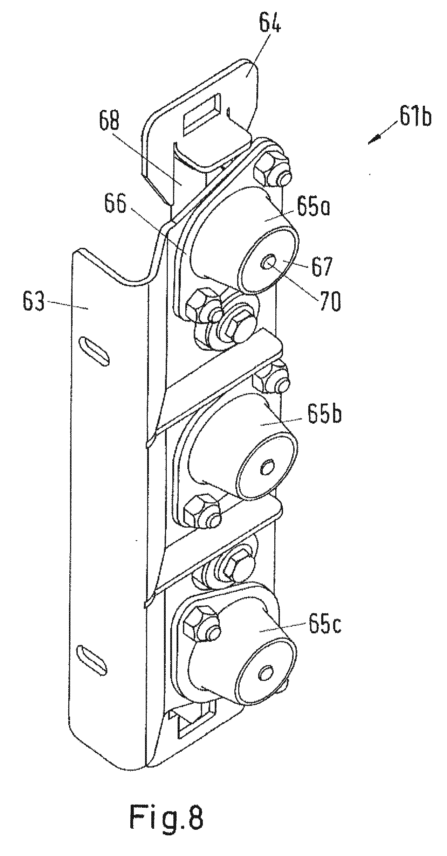

Fig. 8 zeigt im Detail die Verstelleinrichtung 61 b aus Fig. 7a und 7b. Die Verstelleinrichtung weist ein erstes Befestigungselement 63 auf, mit dem es an dem Träger 34 des Untergestells 33 (siehe Fig. 7a) befestigt wird. Das zweite Befestigungselement 64 dient der Befestigung der Schürzenklappe 60. Ferner weist die Verstelleinrichtung 61 b Federelemente 65a, 65b und 65c (z.B. hier dargestellte Gummi-Metall-Elemente der Fa. Rudolf Stöffl GmbH) auf.

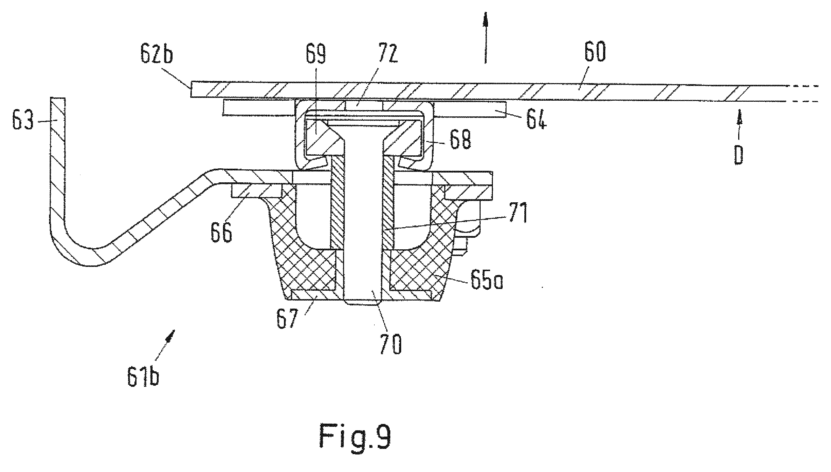

Das Funktionsprinzip der Verstelleinrichtung 61 b ist in Fig. 9 näher erläutert, die einen Querschnitt durch das Element auf Höhe des Federelements 65a zeigt (Schnitt entlang A-A in Fig. 7a). Das Federelement 65a liegt in einer Einfassung 66 an, die wiederum mit dem Winkelelement 63 verbunden ist. In das Gummifederelement 65a ist eine Gewindebuchse 67 eingesetzt. Die Befestigungsplatte 64, in welcher die Schürzenklappe 60 (nicht gezeigt) befestigt wird, ist mit einer C-Schiene 68 fest verbunden, die sich über die gesamte Länge der Verstelleinrichtung 61 b erstreckt. In die C-Schiene 68 ist ein Haltestein 69 eingesetzt, der zur Aufnahme des Schraubenkopfs einer Schraube 70 dient. Die Schraube 70 ist in die Gewindehülse 67 an dem Federelement 65a eingedreht und stellt die Verbindung zwischen dem Halteelement 64 und dem Winkel 63 dar. Zwischen dem Haltestein 69 und der Gewindehülse 67 ist eine Distanzhülse 71 angeordnet, die der zusätzlichen Kraftübertragung bei der Translationsbewegung der Schraube 70 dient. Bei Ausübung eines Drucks D auf die Innenseite der Schürzenklappe 60 wird die Schürzenklappe nach außen in Pfeilrichtung bewegt, in der gewählten Darstellung nach oben. Über die C-Schiene 68 und den Haltestein 69 wird die Schraube 70 in Pfeilrichtung in Richtung Außenseite des Fahrzeugs bewegt und das Federelement 65a (und in analoger Weise die Federelemente 65b und 65c in Fig. 8) gestaucht. Bei Wegnahme des Drucks D übt das Federelement 65a seine Rückstellkraft aus und bewegt die Schürzenklappe 60 und die Schraube 70 wieder in Richtung nach innen, in der gewählten Darstellung der Fig. 9 nach unten. Im Gegensatz zu der in Fig. 6a erläuterten Ausführungsform findet bei der Ausführungsform gemäß Fig. 9 eine reine Translationsbewegung an der Verstelleinrichtung statt.

Die C-Schiene 68 und der Haltestein 69 (bzw. weitere solche Haltesteine, die gegenüber weiteren Federelementen 65b, 65c vorgesehen sind) sind Mittel zum Ausrichten der Schürzenklappe 60. Die Schraube 70 ist durch das Loch 72 zugänglich und kann somit leicht gelöst werden. Danach ist eine Verschiebung der C-Schiene 68 und damit der Schürzenklappe 60 nach oben oder unten möglich, in der gewählten Darstellung der Fig. 9 eine Verschiebung in die Zeichnungsebene hinein oder aus der Zeichnungsebene hinaus. Nach Ausrichten der Schürzenklappe 60 kann die Schraube 70 wieder angezogen werden und analoge Schrauben an anderen Federelementen. Es ist auch möglich, hier aber nicht gezeigt, Mittel zum Verschieben der Schürzenklappe 60 nach rechts oder links vorzusehen. Solche Mittel können ebenfalls aus einer Schiene und Haltesteinen zusammengesetzt sein.

## Patentansprüche

1. Schienenfahrzeug (1), aufweisend
- zumindest eine Schürzenklappe (11, 12, 16, 17; 30, 60) mit einem ersten nach unten verlaufenden Seitenrand (22a, 23a) und einem zweiten nach unten verlaufenden Seitenrand (22b, 23b), die über zumindest eine Verstelleinrichtung (18a, 18b, 19a, 19b, 20a, 20b, 21 a, 21b; 31 a, 31b; 61 a, 61b) beweglich an einem Wagenkasten oder einem Untergestell (13; 33) des Schienenfahrzeugs (1) angebracht ist, wobei
die zumindest eine Verstelleinrichtung (18a, 18b, 19a, 19b, 20a, 20b, 21 a, 21b; 31 a, 31b; 61 a, 61b) so ausgestaltet ist, dass bei einem Druck auf die Innenseite der Schürzenklappe (11, 12, 16, 17; 30; 60) eine Bewegung der Schürzenklappe aus einer Ausgangsposition nach außen in eine ausgestellte Position ermöglicht ist, wobei in der ausgestellten Position zumindest der erste Seitenrand (22a, 23a) ausgestellt ist und parallel oder im Wesentlichen parallel zu der Seitenwand (24a, 24b) des Wagenkastens (80) steht, und die Verstelleinrichtung ein Federelement (50; 65a, 65b, 65c) aufweist, das so ausgestaltet ist, dass es bei Bewegung der Schürzenklappe (11, 12, 16, 17; 30, 60) in die ausgestellte Position gespannt wird und bei Wegnahme des Drucks auf die Innenseite der Schürzenklappe (11, 12, 16, 17; 30, 60) die Schürzenklappe in die Ausgangsposition zurück stellt,
- ein Fahrwerk (7), das um eine vertikale Achse (D) drehbar ist, wobei bei einer Drehung um die vertikale Achse das Fahrwerk (7) die Schürzenklappe (11, 12, 16, 17; 30, 60) berühren kann, einen Druck auf die Innenseite der Schürzenklappe (11, 12, 16, 17; 30, 60) ausüben kann und dadurch die Schürzenklappe aus der Ausgangsposition in die ausgestellte Position bringen kann,
**dadurch gekennzeichnet, dass**
das Fahrwerk (7) bei der Drehung die Schürzenklappe (11, 12, 16, 17; 30, 60) in einem vorderen Bereich (VB) der Schürzenklappe oder in einem hinteren Bereich (HB) der Schürzenklappe berührt, und
der zweite Seitenrand (22b, 23b) in der ausgestellten Position der Schürzenklappe (11, 12, 16, 17; 30, 60) nicht ausgestellt ist oder weniger ausgestellt ist als der erste Seitenrand (22a, 23a), sodass die Schürzenklappe schräg zur Seitenwand (24a, 24b) steht.

2. Schienenfahrzeug nach Anspruch 1, wobei die Verstelleinrichtung (18a, 18b, 19a, 19b, 20a, 20b, 21 a, 21b; 31 a, 31b; 61 a, 61b) so ausgestaltet ist, dass die Bewegung der Schürzenklappe (11, 12, 16, 17; 30, 60) nach außen begrenzt ist.

3. Schienenfahrzeug nach einem der vorangehenden Ansprüche, wobei die Schürzenklappe (30; 60) im Bereich des ersten und/oder des zweiten Seitenrandes (32a, 32b; 62a, 62b) an die zumindest eine Verstelleinrichtung (31 a, 31b; 61 a, 61 b) angekoppelt ist.

4. Schienenfahrzeug nach Anspruch 3, wobei die Schürzenklappe (30; 60) im Bereich des ersten und des zweiten Seitenrandes (32a, 32b; 62a, 62b) an jeweils eine Verstelleinrichtung (31 a, 31b; 61 a, 61 b) angekoppelt ist.

5. Schienenfahrzeug nach einem der vorangehenden Ansprüche, wobei die Schürzenklappe (30; 60) über zumindest ein lösbares Befestigungsmittel an die Verstelleinrichtung (31 a, 31b; 61 a, 61 b) gekoppelt ist, sodass die Schürzenklappe durch Lösen des Befestigungsmittels entfernbar ist.

6. Schienenfahrzeug nach einem der vorangehenden Ansprüche, wobei die Verstelleinrichtung (61 b) Mittel (68, 69) zum Ausrichten der Schürzenklappe (60) aufweist.

7. Schienenfahrzeug nach einem der vorangehenden Ansprüche, wobei das Federelement (50; 65a, 65b, 65c) in der Ausgangsposition eine Vorspannung aufweist.

8. Schienenfahrzeug nach einem der vorangehenden Ansprüche, wobei das Federelement (50; 65a, 65b, 65c) aus einem Elastomer ist.

9. Schienenfahrzeug nach einem der vorangehenden Ansprüche, wobei die Verstelleinrichtung (31 a) aufweist:
- ein erstes Befestigungselement (40; 63), über das die Verstelleinrichtung an den Wagenkasten oder das Untergestell (33) gekoppelt ist,
- ein zweites Befestigungselement (41; 64), an das die Schürzenklappe (30; 60) gekoppelt ist,
wobei das erste Befestigungselement (40; 63) und das zweite Befestigungselement (41; 64) über das Federelement (50; 65a, 65b, 65c) aneinander gekoppelt sind.

10. Schienenfahrzeug nach Anspruch 9, wobei das zweite Befestigungselement (41) über einen Schwenkarm (45) mit dem ersten Befestigungselement (40) gekoppelt ist, der drehbar relativ zu dem ersten Befestigungselement (40) und zu dem zweiten Befestigungselement ist (41), sodass zur Bewegung der Schürzenklappe (30) in die ausgestellte Position der Schwenkarm (45) nach außen schwenkbar ist.

11. Schienenfahrzeug nach Anspruch 9 oder 10, wobei das zweite Befestigungselement (64) über ein Translationsmittel (70) mit dem ersten Befestigungselement (63) gekoppelt ist, sodass zur Bewegung der Schürzenklappe (60) in die ausgestellte Position das Translationsmittel (70) nach außen verschiebbar ist.

12. Schienenfahrzeug nach einem der vorangehenden Ansprüche, wobei die Verstelleinrichtung einen Anschlag (47, 48) aufweist, an dem die Schürzenklappe (30) in der Ausgangsposition anschlägt.

## Claims

1. A rail vehicle (1), comprising
- at least one apron flap (11, 12, 16, 17; 30, 60) with a first downwardly extending side edge (22a, 23a) and a second downwardly extending side edge (22b, 23b), which is attached by way of at least one adjustment device (18a, 18b, 19a, 19b, 20a, 20b, 21a, 21b; 31a, 31b; 61a, 61b) in a movable manner to a car body or undercarriage (13; 33) of the rail vehicle (1), wherein
the at least one adjustment device (18a, 18b, 19a, 19b, 20a, 20b, 21a, 21b; 31a, 31b; 61a, 61b) is designed in such a way that pressure applied on the inside of the apron flap (11, 12, 16, 17; 30; 60) results in moving the apron flap from its initial position outwardly to an extended position, wherein in the extended position at least the first side edge (22a, 23a) is exposed and is parallel or essentially parallel to the side wall (24a, 24b) of the car body (80), and
the adjustment device comprises a spring element (50; 65a, 65b, 65c), which is designed in such a way that it is tensioned by the movement of the apron flap (11, 12, 16, 17; 30, 60) to the extended position and with the removal of the pressure on the inside of the apron flap (11, 12, 16, 17; 30, 60) the apron flap returns to the initial position,
- a chassis (7), which is rotatable around a vertical axis (D), wherein during a rotation around the vertical axis the chassis (7) can touch the apron flap (11, 12, 16, 17; 30, 60), can apply pressure to the inside of the apron flap (11, 12, 16, 17; 30, 60) and can thus move the apron flap from its initial position to the extended position,
**characterized in that**
the chassis (7) touches during the rotation the apron flap (11, 12, 16, 17; 30, 60) in a front section (VB) of the apron flap or in a rear section (HB) of the apron flap, and
the second side edge (22b, 23b) in the extended position of the apron flap (11, 12, 16, 17; 30, 60) is not exposed or is less exposed than the first side edge (22a, 23a) such that the apron flap is diagonal to the side wall (24a, 24b).

2. A rail vehicle according to claim 1, wherein the adjustment device (18a, 18b, 19a, 19b, 20a, 20b, 21a, 21b; 31a, 31b; 61a, 61b) is designed in such a way that the movement of the apron flap (11, 12, 16, 17; 30, 60) is limited outwardly.

3. A rail vehicle according to one of the preceding claims, wherein the apron flap (30; 60) in the area of the first and/or the second side edge (32a, 32b; 62a, 62b) is connected to the at least one adjustment device (31a, 31b; 61 a, 61b).

4. A rail vehicle according to claim 3, wherein the apron flap (30; 60) in the area of the first and the second side edge (32a, 32b; 62a, 62b) is connected to respectively one adjustment device (31a, 31b; 61a, 61b).

5. A rail vehicle according to one of the preceding claims, wherein the apron flap (30; 60) is connected via at least one detachable fastening means to the adjustment device (31a, 31b; 61a, 61b) such that the apron flap can be removed by releasing the fastening means.

6. A rail vehicle according to one of the preceding claims, wherein the adjustment device (61b) has a means (68, 69) for adjusting the apron flap (60).

7. A rail vehicle according to one of the preceding claims, wherein the spring element (50; 65a, 65b, 65c) has in the initial position a pretension.

8. A rail vehicle according to one of the preceding claims, wherein the spring element (50; 65a, 65b, 65c) consists of elastomer.

9. A rail vehicle according to one of the preceding claims, wherein the adjustment device (31a) comprises:
- a first fastening element (40; 63), by means of which the adjustment device is connected to the car body oder undercarriage (33),
- a second fastening element (41; 64), to which the apron flap (30; 60) is connected,
wherein the first fastening element (40; 63) and the second fastening element (41; 64) are connected to one another via the spring element (50; 65a, 65b, 65c).

10. A rail vehicle according to claim 9, wherein the second fastening element (41) is connected with the first fastening element (40) via a swivel arm (45), which is rotatable in relation to the first fastening element (40) and the second fastening element (41) such that to move the apron flap (30) to the extended position the swivel arm (45) is swivelable outwardly.

11. A rail vehicle according to claim 9 or 10, wherein the second fastening element (64) is connected with the first fastening element (63) via a translation means (70) such that to move the apron flap (60) to the extended position the translation means (70) is movable outwardly.

12. A rail vehicle according to one of the preceding claims, wherein the adjustment device comprises a stop (47, 48), against which the apron flap (30) hits in the initial position.

## Revendications

1. Véhicule ferroviaire (1), présentant
- au moins une jupe rabattable (11, 12, 16, 17 ; 30, 60) pourvue d'un premier bord latéral (22a, 23a) s'étendant vers le bas et d'un deuxième bord latéral (22, 23b) s'étendant vers le bas, laquelle est installée de manière mobile par l'intermédiaire au moins d'un dispositif d'ajustement (18a, 18b, 19a, 19b, 20a, 20b, 21a, 21b ; 31a, 31b ; 61a, 61b), au niveau d'une caisse ou d'un châssis (13 ; 33) du véhicule ferroviaire (1), dans lequel
l'au moins un dispositif d'ajustement (18a, 18b, 19a, 19b, 20a, 20b, 21a, 21b ; 31a, 31b ; 61a, 61b) est configuré de telle sorte qu'en présence d'une pression sur le côté intérieur de la jupe rabattable (11, 12, 16, 17 ; 30 ; 60), un déplacement de la jupe rabattable depuis une position de départ vers l'extérieur dans une position déployée est rendu possible, dans lequel au moins le premier bord latéral (22a, 23a) est déployé dans la première position déployée ou est parallèle ou sensiblement parallèle par rapport à la paroi latérale (24a, 24b) de la caisse (80), et
le dispositif d'ajustement présente un élément formant ressort (50 ; 65a, 65b, 65c), qui est configuré de telle sorte qu'il est tendu dans la position déployée lors du déplacement de la jupe rabattable (11, 12, 16, 17 ; 30, 60) et que la jupe rabattable revient dans la position de départ lors de l'arrêt de la suppression sur le côté intérieur de la jupe rabattable (11, 12, 16, 17 ; 30, 60),
- un train de roulement (7), qui peut tourner autour d'un axe (D) vertical, dans lequel lors d'une rotation autour de l'axe vertical, le train de roulement (7) peut toucher la jupe rabattable (11, 12, 16, 17 ; 30, 60), peut exercer une pression sur le côté intérieur de la jupe rabattable (11, 12, 16, 17 ; 30, 60) et peut ainsi amener la jupe rabattable de la position de départ dans la position déployée,
**caractérisé en ce**
**que** le train de roulement (7) touche, lors de la rotation, la jupe rabattable (11, 12, 16, 17 ; 30, 60) dans une zone avant (VB) de la jupe rabattable ou dans une zone arrière (HB) de la jupe rabattable, et
**que** le deuxième bord latéral (22b, 23b) n'est pas déployé dans la position déployée de la jupe rabattable (11, 12, 16, 17 ; 30, 60) ou est moins déployé que le premier bord latéral (22a, 23a) de sorte que la jupe rabattable est inclinée par rapport à la paroi latérale (24a, 24b).

2. Véhicule ferroviaire selon la revendication 1, dans lequel le dispositif d'ajustement (18a, 18b, 19a, 19b, 20a, 20b, 21a, 21b ; 31a, 31b ; 61a, 61b) est configuré de telle sorte que le déplacement de la jupe rabattable (11, 12, 16, 17 ; 30, 60) vers l'extérieur est limité.

3. Véhicule ferroviaire selon l'une quelconque des revendications précédentes, dans lequel la jupe rabattable (30 ; 60) est accouplée, dans la zone du premier bord latéral et/ou du deuxième bord latéral (32a, 32b ; 62a, 62b), à l'au moins un dispositif d'ajustement (31a, 31b ; 61a, 61b).

4. Véhicule ferroviaire selon la revendication 3, dans lequel la jupe rabattable (30 ; 60) est accouplée, dans la zone du premier et du deuxième bord latéral (32a, 32b ; 62a 62b), à respectivement un dispositif d'ajustement (31a, 31b ; 61a, 61b).

5. Véhicule ferroviaire selon l'une quelconque des revendications précédentes, dans lequel la jupe rabattable (30 ; 60) est couplée, par l'intermédiaire au moins d'un moyen de fixation pouvant être desserré, au dispositif d'ajustement (31a, 31b ; 61a, 61b) de sorte que la jupe rabattable peut être retirée en desserrant le moyen de fixation.

6. Véhicule ferroviaire selon l'une quelconque des revendications précédentes, dans lequel le dispositif d'ajustement (61b) présente des moyens (68, 69) pour orienter la jupe rabattable (60).

7. Véhicule ferroviaire selon l'une quelconque des revendications précédentes, dans lequel l'élément formant ressort (50 ; 65a, 65b, 65c) présente dans la position de départ une précontrainte.

8. Véhicule ferroviaire selon l'une quelconque des revendications précédentes, dans lequel l'élément formant ressort (50 ; 65a, 65b, 65c) est composé d'élastomère.

9. Véhicule ferroviaire selon l'une quelconque des revendications précédentes, dans lequel le dispositif d'ajustement (31a) présente :
- un premier élément de fixation (40 ; 63), par l'intermédiaire duquel le dispositif d'ajustement est couplé à la caisse ou au châssis (33) ;
- un deuxième élément de fixation (41 ; 64), auquel la jupe rabattable (30 ; 60) est couplée ;
dans lequel le premier élément de fixation (40 ; 63) et le deuxième élément de fixation (41 ; 64) sont couplés l'un à l'autre par l'intermédiaire de l'élément formant ressort (50 ; 65a, 65b, 65c).

10. Véhicule ferroviaire selon la revendication 9, dans lequel le deuxième élément de fixation (41) est couplé par l'intermédiaire d'un bras de pivotement (45) au premier élément de fixation (40), lequel peut être tourné par rapport au premier élément de fixation (40) et au deuxième élément de fixation (41) de sorte que le bras de pivotement (45) peut être pivoté vers l'extérieur afin de déplacer la jupe rabattable (30) dans la position déployée.

11. Véhicule ferroviaire selon la revendication 9 ou 10, dans lequel le deuxième élément de fixation (64) est couplé par l'intermédiaire d'un moyen de translation (70) au premier élément de fixation (63) de sorte que le moyen de translation (70) peut être coulissé vers l'extérieur afin de déplacer la jupe rabattable (60) dans la position déployée.

12. Véhicule ferroviaire selon l'une quelconque des revendications précédentes, dans lequel le dispositif d'ajustement présente une butée (47, 48), au niveau de laquelle la jupe rabattable (30) vient buter dans la position de départ.
